# EUROPÄISCHE PATENTSCHRIFT

(11) **EP 1 582 505 B1**
(45) Veröffentlichungstag und Bekanntmachung des Hinweises auf die Patenterteilung: **25.06.2008**
(21) Anmeldenummer: 05006681.0
(22) Anmeldetag: 26.03.2005
(51) Int. Cl.: C02F 1/28, B01J 20/06

(54) **Stabile Adsorber-Granulate**
Stable adsorber granulates
Adsorbants granulaires stables

(30) Priorität: 03.04.2004 DE 102004016601
(43) Veröffentlichungstag der Anmeldung: 05.10.2005
(73) Patentinhaber: LANXESS Deutschland GmbH, 51369 Leverkusen (DE)
(72) Erfinder: Schlegel, Andreas, Dr., 47800 Krefeld (DE)

(56) Entgegenhaltungen:
- DE-A1- 10 129 306
- DE-A1- 19 826 186
- US-A- 5 911 882
- BENJAMIN M M ET AL: "Sorption and filtration of metals using iron-oxide-coated sand" WATER RESEARCH, PERGAMON PRESS, OXFORD, GB, Bd. 30, Nr. 11, November 1996 (1996-11), Seiten 2609-2620, XP004070713 ISSN: 0043-1354
- ZHOU P ET AL: "Heavy metal removal from wastewater in fluidized bed reactor" WATER RESEARCH, PERGAMON PRESS, OXFORD, GB, Bd. 33, Nr. 8, Juni 1999 (1999-06), Seiten 1918-1924, XP004162468 ISSN: 0043-1354

## Beschreibung

Die vorliegende Erfindung betrifft stabile Adsorber-Granulate, die eine hohe mechanische Stabilität besitzen sowie deren Verwendung.

Kontakt- und Adsorber-Granulate, auch solche auf Basis von Eisenoxiden und/oder Eisenoxihydroxiden, sind bereits beschrieben worden. Sie werden überwiegend in kontinuierlichen Verfahren eingesetzt, wobei sie sich üblicherweise in turm- bzw. kolonnenartigen Apparaten befinden, die von dem zu behandelnden Medium durchströmt werden, wo an der äußeren und inneren Oberfläche der Granulate bzw. den zugänglichen Poren die chemischen bzw. physikalischen Reaktions- bzw. Adsorptionsprozesse statt finden. Zu diesem Zweck können pulverförmige Materialien nicht eingesetzt werden, weil sie sich in Fließrichtung des Mediums verdichten und dadurch den Strömungswiderstand bis zur Blockierung des Apparates erhöhen.

Wird ein Apparat durch Rückspülung gereinigt, werden große Mengen des Pulvers ausgetragen, gehen verloren bzw. führen zu einer nicht tolerierbaren Belastung des Abwassers.

Die strömenden Medien üben jedoch auch Kräfte auf die Granulate aus, die zur Abrasion und/oder zu einer Bewegung bis hin zu heftiger Agitation der Granulate führen können. Dadurch stoßen die Granulate aneinander, und infolgedessen entsteht unerwünschter Abrieb. Dieser führt zu Verlust von Kontakt- bzw. Adsorbermaterial und Verunreinigung des zu behandelnden Mediums.

Eisenoxid und -hydroxidhaltige Adsorptionsmittel/Reaktionsmittel sind z.B. im Bereich der Wasserreinigung oder Gasreinigung vorteilhaft einsetzbar. Bei der Wasserreinigung wird dieses Mittel in horizontal oder vertikal durchströmten Filtern bzw. Adsorberkolonnen oder durch Zugabe zu dem zu behandelnden Wasser für die Abscheidung von gelösten, suspendierten oder emulgierten organischen oder anorganischen Phosphor-, Arsen-, Antimon-, Schwefel-, Selen-, Tellur-, Beryllium- sowie Cyano- und Schwermetallionen- und -verbindungen aus beispielsweise Trinkwasser, Brauchwasser, Prozesswasser, industriellem, kommunalem Abwasser, Grubenwasser, Mineral-, Weih-, Thermal- und Heilwasser sowie Aquarien-, Gartenteich- und Agrarwasser eingesetzt. Möglich ist auch der Einsatz in sogenannten reaktiven Wänden zur Abscheidung der genannten Schadstoffe aus Grund- und Sickerwasserleitern von kontaminierten Standorten wie Deponien.

Bei der Gasreinigung wird das Mittel in Adsorbern zur Bindung unerwünschter Bestandteile wie Schwefelwasserstoff, Mercaptane und Blausäure, sowie sonstiger Phosphor-, Arsen-, Antimon-, Schwefel-, Selen-, Tellur-, sowie Cyano- und Schwermetallverbindungen in Abgasen eingesetzt. Es ist auch möglich, Gase wie HF, HCl, H₂S, SOₓ, NOₓ zu adsorbieren.

Möglich ist auch die Entfernung von Phosphor-, Arsen-, Antimon-, Selen-, Tellur-, sowie Cyano- und Schwermetallverbindungen aus Altölen und sonstigen kontaminierten organischen Lösungsmitteln.

Kontakt- und Adsorber-Granulate auf Basis von Eiseoxiden und/oder Eisenoxihydroxiden werden auch zur Katalyse chemischer Reaktionen in der Gasphase oder in der flüssigen Phase eingesetzt.

Es sind auch verschiedenartige Verfahren bekannt, um mit Hilfe von Adsorptionsmitteln die Spuren- und Schadstoffe aus wässrigen Systemen zu entfernen.

Zur Wasseraufbereitung werden bevorzugt kontinuierlich betriebene Adsorber eingesetzt, die häufig in Gruppen parallel angeordnet betrieben werden. Um beispielsweise Trinkwasser von organischen Verunreinigungen zu befreien, werden derartige Adsorber mit Aktivkohle beschickt.

Was die Entfernung von Schadstoffen wie Arsen aus Wasser betrifft, sind Eisenoxide und/oder Eisenoxihydroxide allen anderen bekannten Adsorptionsmitteln überlegen. Die Adsorption von Arsenverbindungen durch Eisenhydroxid-Gel ist seit längerem bekannt (R. W. Bunsen, A. A. Berthold, 2. Aufl., Göttingen, 1837).

In der DE 4 320 003 A1 wird ein Verfahren zum Entfernen von gelöstem Arsen mittels festem Eisen(III)hydroxid beschrieben.

In WO 02/47811 A1 wird ein Verfahren zur Herstellung eines eisenhaltigen Sorptionsmaterials unter Druckerhöhung bei einer Temperatur unter 5 °C beschrieben.

In DE 4 320 003 A1 und WO 02/47811 A1 wird der Einsatz von granuliertem Eisenhydroxid als Adsorbermaterial für einen Festbettreaktor genannt. Die Herstellung des granulierten Eisenhydroxids erfolgt über eine Gefrier-Konditionierung (Gefriertrocknung) von durch Neutralisation von sauren Eisen(III)salz-Lösungen erhaltenem Eisenhydroxid bei Temperaturen unter minus 5° C. Dieser Herstellungsprozess ist in hohem Maße energieaufwendig und führt zu stark salzbelasteten Abwässern. Außerdem wird als Ergebnis dieses Herstellungsprozesses ein sehr breites Korngrößenspektrum erhalten, das auch sehr kleine Körnchen mit geringer mechanischer Stabilität enthalten. Dies führt bei einem Einsatz in einem Festbettreaktor dazu, dass sich das Kornspektrum durch mechanische Abrasion der Teilchen im Verlaufe des Betriebs deutlich verringert, was wiederum zu Folge hat, dass feindisperse Partikel von beladenem oder unbeladenem Adsorptionsmittel aus dem Reaktor ausgetragen werden. Ein weiterer Nachteil dieser Granulate ist, dass die Adsorptionsfähigkeit gegenüber Arsenverbindungen erheblich vermindert wird, wenn die Granulate, z.B. durch längere Trockenstandzeit, Wasser verlieren. Wird das Granulat z. B. im feuchten Zustand ausgeliefert, neigt es zum Kleben und ist schwer förderbar.

Zudem verringert sich die Stabilität der Granulate mit einem hohen Wassergehalt, was sich insbesondere beim Transport negativ bemerkbar macht. Ein hoher Wassergehalt erhöht zudem die Transportkosten des Mediums. Feuchtes Medium bietet zudem einen idealen Nährboden für Bakterien, die beim Betrieb in das Trinkwasser ausgewaschen werden können. Kommt feuchtes Medium in den Handel, muss Sorge getragen werden, dass es die Feuchtigkeit nicht unkontrolliert verloren geht, etwa beim Trocknen an der Luft oder an der Sonne, da sonst die Wirkungsweise verloren gehen kann und die Granulatgrößenverteilung infolge Schrumpfung und die Schüttdichte nicht mehr verlässlich sind.

Fernerhin ist bekannt, dass eine Alterung z. B. von amorphem Fe(OH)₃ im wässrigen Milieu schneller von statten geht als im trockenen Zustand. Damit verbunden ist eine Kristallisation und möglicherweise eine Verringerung der Adsorptionskapazität und Stabilität.

Ein weiterer Nachteil bei diesem Verfahren hat sich in der Praxis die Beschaffenheit des granulierten Materials erwiesen, weil das Material vergleichsweise weich und feinkörnig ist. Dadurch tritt bei der Rückspülung des mit dem Material gefüllten Filters ein erheblicher Materialverlust auf. Daher muss bei jeder Rückspülung neues Material hinzugefügt werden, wodurch der Aufwand zur Durchführung des Verfahrens wesentlich erhöht wird. Zudem muss das zu behandelnde Wasser oder Abwasser relativ sauber sein, da andernfalls Abscheidungen von festen Bestandteilen des Wassers an dem Granulat durch die Filterwirkung auftreten und damit die Entfernung der gewünschten Bestandteile behindert wird.

Die in WO 02/26630 A1 und WO 02/26632 A1 beschriebenen Eisenoxid- bzw. - hydroxidgranulate eignen sich jedoch hervorragend für den Einsatz in Festbettadsorbern. Der von den Granulaten gegebenenfalls durch unsachgemäße mechanische Beanspruchung der Granulate abgeriebene Feinanteil wird von Zeit zu Zeit durch Rückspülung aus dem Bett zusammen mit Algen, Eisenflocken und andere aus dem Grundwasser stammenden Feinanteile ausgetragen und wird in einem getrennten Behälter gesammelt, und sedimentiert dort. In geschlossenen Wasserreinigungsbehältern jedoch, wie etwa Kartuschen oder Siebkörben ist ein solches getrenntes Auswaschen des Feinanteils, welcher das aufbereitete Wasser verunreinigen könnte, nicht ohne weiteres möglich. Geschlossene Wasserreinigungsbehälter enthalten das Adsorptionmittel in einer Schüttung.

Da die beschriebenen wie auch die erfindungsgemäßen Granulate frei von artfremden Bindmitteln sein können, ist das Material nach Gebrauch vergleichsweise einfach zu entsorgen.

Jedoch ist die Stabilität von kompaktierten Pulvern bei längerem Einsatz in Adsorbern ungenügend und Verbesserungsbedürftig. Daher kommen diese Formulierungen für den Einsatz in z.B. Adsorbern, insbesondere kontinuierlich betriebenen, bei der Reinigung von Wasser nur bedingt in Betracht. Insbesondere bei der Wartung bzw. Reinigung der Adsorberanlagen durch Rückspülung (s. unten) verlieren derartige Granulate durch die damit verbundene Agitation derselben große Mengen Substanz. Das Rückspül-Abwasser ist durch den Abrieb stark eingetrübt. Dies ist aus mehreren Gründen nicht akzeptabel: Zunächst einmal geht Adsorbermaterial verloren, welches nach einer längeren Standzeit hoch mit Verunreinigungen beladen und daher toxikologisch bedenklich ist. Dann wird der Abwasserstrom mit dem Abrieb belastet, der sedimentieren kann und so zur Beeinträchtigung der Rohrleitungssysteme führt und letztlich die Kläranlage physikalisch und toxikologisch unerwünscht belastet, um nur einige Gründe zu nennen.

Vielfach steht man vor dem Problem, vor allem in Regionen, in denen Brunnen- Leitungs- oder allgemein Trinkwasser mit Arsen- oder sonstigen Schwermetallen belastet ist, keine geeignete Trinkwasseraufbereitungsanlage in der Nähe oder kein geeignetes Aggregat zur Hand zu haben, die die Schadstoffe kontinuierlich entfernen würden.

Von der Firma Brita Wasser-Filter-Systeme GmbH sind bspw. Kartuschen und Vorrichtungen zum Aufbereiten von Flüssigkeiten bekannt (DE 19 905 601 A1; DE 19 915 829 A1; DE 19 814 008 A1, DE 19 615 102 A1, DE 4 304 536 A1, US 6,099,728). Diese Vorrichtungen eignen sich gut zur ganz- oder teilweisen Entsalzung von Trinkwasser in Haushaltskannen unmittelbar vor dem Gebrauch des Trinkwassers. Für die leichte Handhabbarkeit der Granulate beim Transport, beim Umfüllen oder beim befüllen der Adsorbertanks ist es jedoch notwendig, dass die Granulate einen möglichst geringen Feuchtigkeitsgehalt aufweisen, da diese sonst zum Verkleben neigen und nicht mehr frei fließen können.

Der vorliegenden Erfindung lag daher die Aufgabe zugrunde, verbesserte Granulate auf Basis von Eisenhydroxid herzustellen, die eine hohe mechanische Stabilität verbunden mit einem hohen Bindevermögen für in Flüssigkeiten und Gasen enthaltenen Schadstoffe aufweisen, die Rieselfähigkeit und einen geringen Wassergehalt aufweisen, und welche auch ohne organische Bindemittel oder anorganische Fremdstoffbindemittel eine ausreichende mechanische Stabilitäterlangen.

Diese Aufgabe wurde gelöst durch Granulate bestehend im Wesentlichen aus Eisenoxid- und/oder Eisenoxyhydroxid, die einen Trübungswert nach dem Trübungstest von < 300 FNU aufweisen, erhältlich durch die Mischung von im wesentlichen zwei Komponenten, bestehend im wesentlichen aus
1. einer Base und
2. einer Fe(III)-Lösung
wobei, sofern eine FeClSO₄-Lösung verwendet wird, diese zur vorgelegten Base zugegeben wird.

Die Granulate weisen vorzugsweise einen Trübungswert nach dem Trübungstest von < 200 FNU auf.

Die Granulate weisen vorzugsweise einen Abriebswert nach dem Abriebtest von < 10 % auf. Bevorzugt weisen die Granulate einen Abriebswert nach den Abriebtest von < 5 %, ganz besonders bevorzugt von < 1,5 % auf.

Die erfindungsgemäßen Granulate sind erheblich belastbarer und weisen somit eine viel größere Abriebsstabilität gegenüber mechanischer und hydraulischer Beanspruchung auf.

Alle bisher bekannten festen Adsorptionsmittel zeigen selbst nach wiederholter mechanischer Belastung einen kontinuierlichen Abrieb, der zu einer nicht tolerierbaren Rotbis Braunfärbung des durchlaufenden Wassers führt. Aus diesem Grunde wurde ein Abriebstest und ein Trübungstest entwickelt, der den realen Anforderungen an die Stabilität der Adsorptionsmittel Rechnung trägt.

Die Beurteilung der mechanischen und hydraulischen Abriebsfestigkeit erfolgte nach folgenden Methoden:

### Trübungstest

Eine verbesserte Prüfung der Granulatstabilität, die den realen Erfordernissen in Kartuschenanwendungen ebenfalls nahe kommt, ist die Trübemessung der überstehenden Suspension nach mechanischer Agitation der Granulate in Wasser. Die Trübungsmessung ist ein wichtiges Verfahren bei der Wasser-, Abwasser- und Schlammuntersuchung.

10 g Granulat werden in eine 250ml Glasflasche "Duran®" mit Skalierung, Fa. Schott, Artikel-Nr. 21801365 eingewogen und mit VE-H₂O auf 150ml aufgefüllt. Dann wird die Flasche in den Laborschüttler "LabShaker", Modell Kühner, Fa. Braun-Melsungen eingespannt und bei Raumtemperatur 30 min bei 250 Upm geschüttelt. Diese Prozedur stellt einen sog. Abriebszyklus dar. Der Flascheninhalt wird sodann 1 min stehen gelassen (Sedimentation) und anschließend über ein 200mm-Rundsieb der Fa. Retsch mit 40µm Siebgewebe abdekantiert. Das durch das Sieb gelaufene Filtrat wird der Trübungsmessung unterzogen. Zur Trübungsmessung nach Meßmethode EN ISO 7027:1999 verwendete man ein Labor-Trübungsphotometer "Nephla", der Fa. Dr. Lange. Messverfahren: 90 ° Streulichtphotometrie, Wellenlänge: 860 nm; Abgleich: DIN Standard Formazin; Umgebungstemperatur: 20-25 °C; Die Kalibrierung erfolgt anhand der Lichtstreuung von Formazin in Trübungseinheiten Formazin (TE/F), die genauer allerdings als FNU (formazine nephelometric units) angegeben werden. Den Trübungswert (Dimension: TE/F = "Trübungseinheit Formazin" oder FNU = "formazine nephelometric units") trägt man gegen die Anzahl der Abriebszyklen auf. Für die vorliegende Erfindung wurde die Messung der Trübung nach den 5. Durchlauf als Erfindungsmerkmal gewählt. Als abriebsstabil im Sinne des Trübungstestes sollen nur jene Granulate gelten, die auch in jedem von fünf darauffolgenden Abriebszyklen einen bestimmten beanspruchten Trübungswert nicht überschreiten. Eine Probe vollentsalztem Wasser, mit dem die erfindungsgemäßen Granulate in Kontakt gebracht werden, hat beispielsweise eine Trübung von 0.37 FNU.

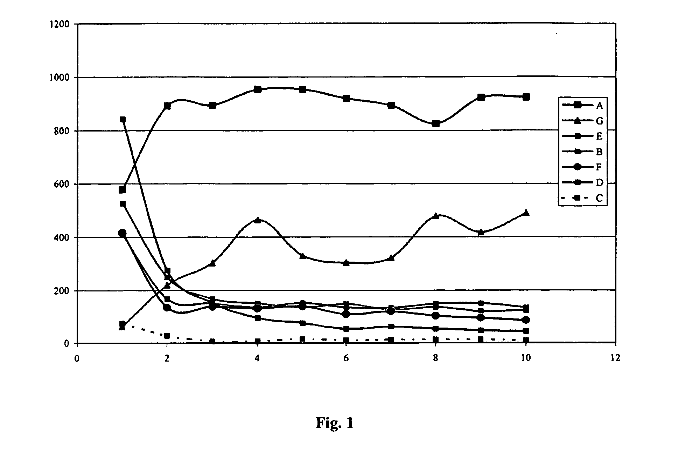

Die erfindungsgemäßen Granulate zeigen auch nach den scharfen mechanischen Belastungen keinen Abrieb, der zu einer ungewollten Trübung der überstehenden Lösung führt (Fig. 1).

### Abriebtest

10 g des zu untersuchenden Granulats mit Korngrößen >0.5 mm und Feuchten ≤ 5 % wurden in eine 250ml Glasflasche "Duran®" mit Skalierung, Fa. Schott, Artikel-Nr. 21801365 eingewogen mit 150 mL VE-Wasser versetzt und auf einer Schüttelmaschine LabShaker (Modell Kühner, Fa. Braun-Melsungen) über einen Zeitraum von 30 Minuten mit 250 Umdrehungen/Minute bei Raumtemperatur in Rotation versetzt. Anschließend wurde von der Suspension mittels eines Siebs der Feinanteil <0.1 mm isoliert, auf eine Feuchte ≤ 5 % getrocknet und gewogen. Das Gewichtsverhältnis zwischen Auswaage und Einwaage bestimmt den Abriebswert x in %. x(%) = [100×Auswaage Feinanteil(g)/Einwaage Granulat(g)].

Die gleichen Ergebnisse für Abrieb und Trübung wurden erzielt, wenn man eine moderne Tisch-Schüttelmaschine "Lab-Shaker", Fa. Kühner AG, Typ LSR-V-25, Schüttelfrequenz 250 Umdrehungen/Minute mit digitaler Frequenzanzeige (+/- 1 U/min) verwendet.

Die Granulate weisen vorzugsweise α-, β-, γ- und/oder δ- FeOOH-Phasen und/oder Ferrihydrit- sowie Misch- und Zwischenphasen derselben auf. Besonders bevorzugt werden die Granulate zusätzlich mit Oxiden und/oder /(Oxi)hydroxiden mit den Elementen Al, Mg, Ti verfestigt.

Zum erfindungsgemäßen Einsatz von feinteiligen Eisenoxihydroxiden eignen sich z.B. transparente Eisenoxihydroxidpigmente mit einer mittleren Teilchengröße von kleiner 0.1µm und spezifischen Oberflächen von mehr als 80 m². Es können aber auch entsprechend feinteilige Eisenoxidpigmente eingesetzt werden, vorzugsweise Hämatite, Magnetite oder Maghämite.

Die Granulate weisen vorzugsweise einen Wassergehalt von < 50%, bevorzugt < 20%, ganz besonders bevorzugt < 10% auf. Den Feuchtigkeits- bzw. Wassergehalt bestimmt man, indem man eine Probe im Umlufttrockenschrank bei 70-100 °C bis zur Gewichtskonstanz trocknet. Die Differenz zwischen Ein- und Auswaage bestimmt den Feuchtigkeitsgehalt.

Die Korngröße des Materials ist beliebig, sie liegt vorzugsweise zwischen 0,1 und 40 mm, besonders bevorzugt zwischen 0,2 bis 20 mm. Diese kann erreicht werden durch mechanische Formgebung des halbfesten, pastösen Filterkuchens vor der Trocknung durch eine Granulier- oder Pelletieranlage oder in einer Strangpresse zu Formkörpern mit einer Größe im Bereich zwischen 0.2 und 20 mm und anschließender Trocknung an der Luft, auf einem Bandtrockner oder in einem Trockenschrank, und/oder durch mechanisches Zerkleinern auf die gewünschte Korngröße nach der Trocknung. Danach weisen die Granulate vorzugsweise eine Korngröße von 0,01 bis 5 mm, bevorzugt von 0,1 bis 1 mm, auf. Werden die Granulate durch Sprühtrocknung hergestellt, weisen sie vorzugsweise eine Korngröße von < 0,3 mm, insbesondere von < 0,2 mm auf. Die Teilchengrößenbestimmung werden dabei mit dem Gerät Mastersizer der Fa. Malvern Instruments durchgeführt.

Die Granulate weisen vorzugsweise eine Primärteilchengröße von bis zu 100 nm, bevorzugt von 4 bis 50 nm auf. Dabei wird die Primärteilchengröße aus rasterelektronenmikroskopischen Aufnahmen wird durch Ausmessen bestimmt (Gerät: XL30 ESEM FEG, Fa. Philips).

Die Granulate weisen vorzugsweise eine BET-Obefläche von > 100 m²/g, insbesondere > 250 m²/g auf. Die Bestimmung der spezifischen Oberfläche der erfindungsgemäßen Produkte nach BET erfolgt über das Trägergasverfahren (He:N₂=90:10) nach der Einpunkt-Methode, gemäß DIN 66131 (1993). Vor der Messung wird die Probe 1 h bei 140 °C im trockenen Stickstoffstrom ausgeheizt.

Für die leichte Handhabbarkeit der Granulate beim Transport, beim Umfüllen oder beim befüllen der Adsorbertanks ist es zudem notwendig, dass die Granulate einen möglichst geringen Feuchtigkeitsgehalt aufweisen, da diese sonst zum Verkleben neigen und nicht mehr frei fließen können. Die Granulate sind deswegen vorzugsweise fließbar. Die freie Fließbarkeit (Fließtest) wird bestimmt, indem man eine Probe von 25 g in eine Haver&Boecker Analysensiebmaschine des Typs Haver EML200 digital plusN auf einem DIN-Rundsieb vom Durchmesser 200 mm mit einer Maschenweite, die der oberen Grenze der Korngrößenverteilung des Produktes entspricht, gleichmäßig verteilt und mittels einer Amplitude von 0.3 mm siebt. Als fließbar gilt, wenn das Granulat innerhalb von 1 min zu mindestens > 95 % durchgesiebt ist.

Obwohl nicht als Fließtest in Sinne der Anmeldung definiert, kann man auch die freie Fließbarkeit der Granulate erkennen, in dem man die Zeit misst, in der ein Granulatvolumen von 100 mL, durch einen DIN-Auslaufbecher nach DIN EN ISO 2431:1996, Auslassöffnung von 8 mm Durchmesser, bis zur vollständigen Entleerung frei durchrieselt.

Es wurde gefunden, dass die erfindungsgemäßen Granulate eine hohe Bindekapazität für in Gewässern, Flüssigkeiten oder Gasen enthaltene Schadstoffe besitzen und sie zudem eine ausreichend hohe Stabilität gegenüber durch strömende Medien hinsichtlich mechanischer oder hydraulischer Beanspruchung besitzen.

Die Granulate weisen vorzugsweise eine Arsen-Adsorption nach dem Arsen-Adsorptionstest von > 55 %, insbesondere > 80%, auf.

### Arsen-Adsorptionstest

Zur Messung der Adsorption von Arsen(V) werden in einer 5L PE-Flasche über einen bestimmten Zeitraum 3L einer wässrigen Lösung von Na₂HAsO₄ bei einem pH-Wert von ca. 8 mit der jeweils angegebenen Konzentration von ca. 2.5-3 mg/L Arsen mit 3 g der zu untersuchenden Probe behandelt und dabei die Flasche auf rotierenden Walzen bei Raumtemperatur in Bewegung versetzt. Nach bestimmten Zeitabständen entnimmt man etwa 50 mL der Lösung, filtriert diese über ein Celluloseacetat-Membranfilter mit der Porengröße 0.45 µ ab, und misst deren Arsen-Gehalt. Die Adsorption von As-Ionen auf Eisenhydroxid wird definiert als Konzentration der nach 120 min in Lösung verbleibenden As^{/5+}-Ionen, und ist in den Beispielen in %, verglichen mit der angegebenen Ausgangskonzentration (=100 %) angegeben

Zur Messung der Adsorption von Cd²⁺ und V⁵⁺ werden in einer 5L PE-Flasche über einen bestimmten Zeitraum 3L einer wässrigen Lösung von Cd(NO₃)₂ und NaVO₃, bei einem pH-Wert von 7,5 mit der jeweils angegebenen Konzentration von ca. 2.4 mg/L an Cd²⁺ oder V⁵⁺ mit 3 g der zu untersuchenden Probe behandelt und dabei die Flasche auf rotierenden Walzen ("Rollenbock") bei 60 U/min bei Raumtemperatur um die eigene Längsachse gedreht und dabei in Bewegung versetzt. Nach bestimmten Zeitabständen entnimmt man etwa 50 mL der Lösung, filtriert diese über ein Celluloseacetat-Membranfilter mit der Porengröße 0.45 µ ab, und misst deren Arsen-Gehalt. Die Adsorption von As-Ionen auf Eisenhydroxid wird definiert als Gehalt der nach 120 min in Lösung verbleibenden Schwermetall-Ionen, und ist in den Beispielen in %, verglichen mit der angegebenen Ausgangsmenge (=100 %) in der gleichen Weise wie bei Arsen angegeben:
x₁ mg in Lösung vorher = 100 %;
x₂ mg nach 120 min = Y %;
Adsorption nach 120 min: Z % = 100 %-Y %.

Die As-und Schwermetall-Gehalte des beladenen Eisenoxihydroxids bzw. der Lösungen bestimmt man über die Massenspektrometrie (ICP-MS) gemäß DIN 38406-29 (1999) oder über optische Emissionsspektroskopie (ICP-OES) gemäß EN-ISO 11885 (1998) mit jeweils induktiv gekoppeltem Plasma als Anregungseinheit

Eisenoxihydroxide mit hohen spezifischen Oberflächen können insbesondere bevorzugt durch Reaktion von Fe(III)-Salzen mit Base hergestellt werden. Zu einer sauren Fe³⁺-Salzlösung (FeCl₃, Fe₂SO₄)₃, FeCISO₄, Fe(NO₃)₃ oder andere gelöste Salze) wird entsprechend der Stöchiometrie der Reaktion Fe³⁺ + 3 OH⁻ → Fe(OH)₃ Lauge (NaOH, KOH, NH₃, Na₂CO₃, Ca(OH)₂) zugegeben, bis der pH-Wert bei pH 6-8 stabil bleibt, und Fe(OH)₃ quantitativ gefällt ist. In einer bevorzugten Ausführungsform wird die Fe(III)-Salzlösung nur bis zu einem sauren pH-Wert (besonders bevorzugt: pH4-7) gefällt, so dass Fe noch nicht quantitativ gefällt ist, da sich die Adsorptionseigenschaften des Mediums im leicht sauren pH verbessert. Die oben beschriebenen Reaktionen können selbstverständlich auch in umgekehrter Zugabereihenfolge durchgeführt werden mit Ausnahme von FeClSO₄-Lösung, und der saure pH-Wert durch einen Überschuss an Fe³+-Salzen eingestellt werden.

Bei den Fällverfahren im wässrigen Medium führen nach bisherigem Wissen Fällungen im alkalischen Milieu zu weniger gut adsorbierenden Granulaten als solche im sauren. Z. B. auch durch Konzentration und Temperatur kann eine Alterung von Fe(OH)₃ zu kristallinen FeOOH-Phasen gezielt gesteuert werden.

Je nach Reaktionsbedingungen lassen sich die Phasen δ-FeOOH, β-FeOOH, α-FeOOH, Ferrihydrit erhalten, die je nach Kristallinitätsgrad sehr hohe spezifische Oberflächen besitzen können und daher sehr gut Arsen adsorbieren.

In schlecht kristallinen Phasen zeigt das Röntgenpulverdiffiaktogramm breite Reflexe und in elektronenmikroskopischen Aufnahmen einer dispergierten Granulatprobe lassen sich feinteilige Partikel im Durchmesser von einigen Nanometer erkennen.

Das eingesetzte feinteilige Eisenhydroxid hat eine unregelmäßige Teilchenmorphologie. In den rasterelektronenmikroskopischen Aufnahmen lassen sich meist Haufwerke von agglomerierten, teilweise sphärolitischen Teilchen erkennen. Diese einzelnen Teilchen weisen einen Durchmesser von ca. 50 nm auf. Die BET-Oberfläche reicht von 50 bis 500 m²/g, bevorzugt von 150 bis 350 m²/g.

Die Primärteilchengröße wurde aus rasterelektronenmikroskopischen Aufnahmen wird durch Ausmessen bestimmt (Gerät: XL30 ESEM FEG, Fa. Philips). Sind die Primärteilchen nadelförmig, wie z. B. in der Phase von α-FeOOH, lässt sich als Maß für die Teilchengröße die Nadelbreite angeben. Man beobachtet bei nanoteiligen α-FeOOH- Teilchen Nadelbreiten von bis zu 100 nm, in der Hauptsache jedoch zwischen 4 und 50 nm. Durch Dotierungen oder spezielle Reaktionsführung lassen sich die Nadelformen in ihrem Länge:Breite-Verhältnis variieren. Sind die Primärteilchen isometrisch, wie z. B. in den Phasen Ferrihydrit, δ-FeOOH, α-Fe₂O₃, γ-Fe₂O₃, können die Teilchendurchmesser durchaus auch kleiner als 20 nm sein.

Wie aus Röntgenpulverdiffraktogrammen hervorgeht, können die Eisenoxid-hydroxide weitgehend amorph sein oder Ferrihydrit-Strukturen enthalten.

Aus der so hergestellten Suspension der Eisenhydroxid-Verbindungen lassen sich das Wasser und darin gelöste Bestandteile auf verschiedene Weisen entfernen. Als einfachste Variante hat sich die vollständige Entfernung des Wassers aus der Suspension z. B. durch Sprühtrocknen und einer nachfolgenden Auswaschung der auskristallisierten Salze durch Redispergieren des Feststoffgemisches, gefolgt von Filtration, Pastenformung und/oder Granulierung und Trocknung erwiesen.

Für Anwendungen, bei denen höhere Ansprüche an die mechanische Festigkeit der Granulate/Kontakte gestellt werden, wird die Suspension filtriert oder zentrifugiert und der Rückstand im wesentlichen salzfrei gewaschen. Es hat sich gezeigt, dass die Stabilität der beschriebenen Granulate selbst bei einem Fremdsalzgehalt von bis zu 5 % noch eine ausreichende Stabilität aufweisen. Der (Filter-)kuchen, den man als Rückstand erhält, ist eine feste bis halbfeste Paste. Diese kann anschließend ganz oder teilweise entwässert werden, und das so erhaltene Material kann anschließend in die gewünschte Form und/oder Größe zerkleinert werden. Die spätere Anwendung des Granulats bestimmt die bevorzugte Vorgehensweise bei seiner Herstellung und ist für den Fachmann auf dem jeweiligen Anwendungsgebiet durch einfache orientierende Vorversuche bestimmbar. Sowohl der unmittelbar getrocknete Filterkuchen als auch die getrockneten Formkörper können dann als Kontakt bzw. Adsorber eingesetzt werden.

Als andere Methode, Granulate zu erzeugen, hat sich die Granulierung einer halbfeuchten Paste bewährt. Dabei formt man Pellets bzw. Stränge aus einer halbfesten Paste z. B. mittels eines einfachen Lochblechs, einer Walzenpresse oder eines Extruders und trocknet diese entweder gleich oder bringt diese Extrudate mittels eines Granulierers zusätzlich in eine Kugel- oder Granulatform. Die noch feuchten Kügelchen bzw. Granulate können im Nachhinein auf einen beliebigen Feuchtigkeitsgehalt nachgetrocknet werden. Damit die Granulate nicht zusammenbacken, empfiehlt sich ein Restfeuchtegehalt von < 50 %, bevorzugt < 30 %, besonders bevorzugt < 20 %.

Durch Sprühgranulation lassen sich beispielsweise sehr feinteilige Granulate erzeugen, die eine sehr hohen äußeren Kontaktoberfläche bereitstellen. An den äußeren Kornoberflächen finden die ersten Kontakte zu den gelösten Ionen statt. Zwar finden auch Diffusions- und Adsorptionsvorgänge der Ionen in die Poren und Kanäle der Granulate statt, jedoch erst nach einer gewissen Kontaktzeit.

Aufgrund ihrer hohen Dichte und Abriebsstabilität lassen sich die Sprühgranulate auch ohne nennenswerten Druckverlust in einer Filteranlage einsetzen, die z. B. auch im Aufstrom betrieben werden kann. Eine bevorzugte Anwendung dieser Granulate ist jedoch die Verwendung in Kartuschengehäusen, die eine hohe Adsorptionskapazität gegenüber Arsen und anderen Schadstoffen bei sehr kurzen Kontaktzeiten aufweisen, aber gleichzeitig eine hohe Abriebssicherheit garantieren müssen.

Eine solche Kugelform oder eine gleichmäßige Teilchenform kann für den Einsatz in Festbettadsorbern wegen der dadurch besseren Schüttung im Adsorberbehälter gegenüber unregelmäßig geschroteten Granulaten oder Pellets in Strangform von Vorteil sein.

Generell ist es möglich, zur Verbesserung des Filtrationsverhaltens der Suspensionen übliche filtrationsverbessernde Maßnahmen anzuwenden wie sie z.B. in Solid-Liquid Filtration and Separation Technology, A. Rushton, A.S., Ward R.G., Holdich, 2. Aufl. 2000, Wiley-VCH, Weinheim sowie Handbuch der Industiellen Fest/Flüssig-Filtration, H. Gasper, D. Öchsle, E. Pongratz, 2. Aufl. 2000, Wiley-VCH Weinheim beschrieben sind. So können den Suspensionen zum Beispiel Flockungsmittel zugesetzt werden.

Die erfindungsgemäßen Produkte können einer Trocknung an Luft, und/oder im Vakuum, und/oder im Trockenschrank und/oder auf Bandtrocknern oder durch Sprühtrocknung, bevorzugt bei Temperaturen von -25 bis 250 C, besonders bevorzugt bei 60 bis 120 C, unterzogen werden. Die Trocknung erfolgt zweckmäßig bei Temperaturen bis zu 250 °C. Auch eine Vakuum- oder Gefriertrocknung des Materials ist möglich.

Die erfindungsgemäßen Produkte haben vorzugsweise einen Restwassergehalt von weniger als 50 Gew.-%.

Nach den oben beschriebenen Methoden erhältliche Produkte können anschließend beispielsweise durch Schroten oder Mahlen weiter zerkleinert werden. Da sich die Produkte bei ihrem ersten Kontakt mit Wasser, beispielsweise beim ersten Füllen eines frisch beschickten Adsorberapparats mit Wasser, jedoch autogen zerkleinern, wird dies in der Regel nicht erforderlich sein. Hierbei entsteht eine statistische Korngrößenverteilung, jedoch keine Partikel einer Größe, die in nennenswertem Maße durch das strömende Medium aus dem Adsorber ausgetragen werden.

Auf eine separate Granulierung, wie sie beim Einsatz herkömmlicher Eisenoxihydroxiden in Form (rieselfähiger) Pulver erforderlich wäre, entweder unter Zuhilfenahme substanzfremder Bindmittel oder höchster Linienkräfte beim Kompaktieren, kann völlig verzichtet werden.

Die Erfindung betrifft auch die Verwendung der Granulate zur Entfernung von Schadstoffen und/oder Schwermetallen wie Phosphaten, Antimon-, Beryllium-, Selen-, Tellur-, Schwefel-Cyan- und Arsenverbindungen aus strömbaren Medien wie Gasen und/oder Flüssigkeiten wie Wasser oder Abwasser. Auch Geruchststoffe werden adsorbiert.

Die Granulate werden besonders bevorzugt zur Entfernung von Arsenverbindungen aus Wasser oder Abwasser verwendet.

Anhand zahlreicher Experimente konnte gezeigt werden, dass durch die erfindungsgemäßen Granulate auch mit Arsen-Ionen isostrukturelle Ionen wie z. B. Phosphat, Antimonat, Molybdat, Chromat, Wolframat, Vanadat adsorbiert werden.

Eine in diesem technischen Gebiet bevorzugte Anwendung ist die Dekontamination von Wasser, insbesondere von Trinkwasser. In jüngster Zeit wird der Entfernung von Arsen aus Trinkwasser besondere Aufmerksamkeit gewidmet. Die erfindungsgemäßen Granulate eignen sich hierzu hervorragend, da selbst die niedrigen von der US- Behörde EPA festgesetzten Grenzwerte durch die Verwendung der erfindungsgemäßen Granulate nicht nur eingehalten, sondern sogar unterschritten werden können.

Die Granulate werden vorzugsweise in Wasser-Aufarbeitungsanlagen wie Kartuschen zur Entfernung von Arsenverbindungen aus Wasser oder Abwasser verwendet.

Anhand der nachfolgenden Beispiele wird die Erfindung näher erläutert, ohne dass dadurch eine Einschränkung der Erfindung bewirkt werden soll.

### Beispiele

### Beispiel 1

Es wurden 76 m³ Lösung mit 107 g/l Fe₂(SO₄)₃ 50°C aufgeheizt und anschließend in 61 min mit ca. 15m³ NaOH-Lösung (300 g/L) bei gleichzeitiger Begasung mit 1500 m³/h Luft bis zum End-pH 9,2 gefällt. Nach Zugabeende wurde der Ansatz 22 min unter Begasung nachgerührt. Der Ansatz wurde auf einer Filterpresse bis zur Filtrat-Leitfähigkeit < 1000 µS/cm gewaschen, die Filterpasten durch einen Pastenformer auf Bandtrockner gedrückt und getrocknet. Die Kornfraktion 0.5-2 mm wurde untersucht.
BET: 326 m²/g
Abrieb (Abriebstest): 2,4 %;
Trübung (Trübungstest) nach 2 Durchläufen: 250 FNU;
Trübung (Trübungstest) nach 5 Durchläufen: 135 FNU;
Wassergehalt: 9 %;
Schüttdichte: 0,94 g/cm³;
Phasenanalyse: Hauptbestandteil = FeOOH.
As(V)-Adsorption nach 120 min: 59,3 %;
Cd²⁺-Adsorption nach 120 min: 54,2 %; c₀= 2,4 mg/L; c(120 min) = 1,1 mg/L.
V⁵⁺-Adsorption nach 120 min: 33,3 %; c₀= 2,4 mg/L; c(120 min) = 1,6 mg/L.
Fließtest: Fließt.

### Beispiel 1A

Ein Teil der gewaschenen Filterpaste wurde mit einer 0,8mm-Düse sprühgetrocknet. Dieser ergab eine sehr schmale Teilchengrößenverteilung in der Hauptsache zwischen 30 und 200 µm: D(v,0.1)=58.97 µm; D[3,2]=91.36 µm.
BET: 326 m²/g.
Trübung (Trübungstest) nach 2 Durchläufen: 28 FNU;
Trübung (Trübungstest) nach 5 Durchläufen: 16 FNU;
Wassergehalt: 22,3 %;
Schüttdichte: 1,00 g/cm³;
As(V)-Adsorption nach 120 min: 96,4 %;
Fließtest: Fließt.

| Beispiel | As-Gehalt im Filtrat [µg/l] nach x min Kontaktzeit | | | | | | |
|---|---|---|---|---|---|---|---|
| | Ausgang | 5min | 10min | 30min | 60min | 120min | 360min |
| Beispiel 1 | 2700 | 2300 | 2200 | 1800 | 1400 | 1100 | 510 |
| Beispiel 1A | 2500 | 1500 | 960 | 440 | 180 | 90 | 30 |

### Beispiel 2

Es wurden 76 m³ Lösung mit 106,3 g/l Fe₂(SO₄)₃ auf 45°C aufgeheizt und anschließend in 50 min mit ca. 13m³ NaOH-Lösung bei gleichzeitiger Begasung mit 1500 m³/h Luft bis zum End-pH 4,7 gefällt. Nach Zugabeende wurde der Ansatz 28 min unter Begasung nachgerührt. Ein Teil des Ansatzes wurde auf einer Filterpresse bis zur Filtrat-Leitfähigkeit < 1000 µS/cm gewaschen, die Filterpasten durch einen Pastenformer (mit 6,5mm-Lochblech) auf einen Bandtrockner gedrückt und getrocknet. Die Kornfraktion 0.5-2 mm wurde untersucht.
BET: Schlussprobe: 185 m²/g;
Abriebwert (Abriebtest): 4,7 %;
Wassergehalt: 6,0 %;
Schüttdichte: 0,94 g/cm³;
As(V)-Adsorption nach 120 min: 63,0 %;
Phasenanalyse: Hauptbestandteil = FeOOH;
Fließtest: Fließt.

### Beispiel 2A

Ein Teil der gewaschenen Filterpaste wurde zu einer Suspension mit 9,5 % Feststoff angemaischt und über einen Düsensprühtrockner mit 0,8mm-Düse getrocknet.
BET: 326 m²/g.
Wassergehalt: 16,9 %;
Schüttdichte: 1,08 g/cm³;
Trübung (Trübungstest) nach 2 Durchläufen: 276 FNU;
Trübung (Trübungstest) nach 5 Durchläufen: 76 FNU;
As(V)-Adsorption nach 120 min: 98,8 %;
V⁵⁺-Adsorption nach 120 min: 54,2 %; c₀= 2,4 mg/L; c(120 min) = 1,1 mg/L.
Fließtest: Fließt.

| Beispiel | As-Gehalt im Filtrat [µg/l] nach x min Kontaktzeit | | | | | | |
|---|---|---|---|---|---|---|---|
| | Ausgang | 5min | 10min | 30min | 60min | 120min | 360min |
| Beispiel 2 | 2700 | 2400 | 2200 | 1800 | 1400 | 1000 | 290 |
| Beispiel 2A | 2700 | 1800 | 1400 | 740 | 280 | 70 | < 10 |

### Beispiel 3:

7,5 L einer NaOH-Lösung (100 g/L) werden vorgelegt, unter Rühren auf 70 °C aufgeheizt und in 30 min mit 13,5 L einer FeClSO₄-Lösung (100 g/L) versetzt bis pH 5. Der Ansatz wurde 30 min nachgerührt. Eine 5 L Suspension wird auf der Nutsche bis zu einer Leitfähigkeit von < 1000 µS/cm gewaschen und anschließend bei 75 °C getrocknet. Der getrocknete Feststoff wird durch ein 2mm-Sieb gedrückt, der Feinanteil < 0,5 mm abgesiebt.
BET: 304 m²/g;
Abriebwert (Abriebtest): 1,1 %
Trübung (Trübungstest) nach 2 Durchläufen: 167 FNU;
Trübung (Trübungstest) nach 5 Durchläufen: 152 FNU;
Wassergehalt: 11,4%;
Schüttdichte: 1,00 g/cm³;
As(V)-Adsorption nach 120 min: 64,3 %;
Fließtest: Fließt;
Phase: evtl. schlecht kristallisiertes δ-FeOOH.

| | As-Gehalt im Filtrat [µg/l] nach x min Kontaktzeit | | | | | | |
|---|---|---|---|---|---|---|---|
| | Ausgang | 5min | 10min | 30min | 60min | 120min | 360min |
| Beispiel 3 | 2800 | 2500 | 2300 | 1800 | 1500 | 1000 | 240 |

### Beispiel 4

12,2 L einer Fe₂(SO₄)₃-Lösung (107 g/L) werden vorgelegt, unter Rühren auf 70 °C aufgeheizt und in 30 min mit 9,0 L einer NaOH-Lösung (100 g/L) versetzt bis pH 5. Der Ansatz wurde 30 min nachgerührt. Eine 5 L Suspension wird auf der Nutsche bis zu einer Leitfähigkeit von < 1000 µS/cm gewaschen und anschließend bei 75 °C getrocknet. Der getrocknete Feststoff wird durch ein 2mm-Sieb gedrückt, der Feinanteil < 0,5 mm abgesiebt.
BET: 312 m²/g;
Abriebwert (Abreibtest): 0,7 %
Trübung (Trübungstest) nach 2 Durchläufen: 135 FNU;
Trübung (Trübungstest) nach 5 Durchläufen: 139 FNU;
Wassergehalt: 12,7 %;
Schüttdichte: 0,89 g/cm³;
As(V)-Adsorption nach 120 min: 81,4 %;
Fließtest: Fließt;
Phase: röntgenamorph.

| | As-Gehalt im Filtrat [µg/1] nach x min Kontaktzeit | | | | | | |
|---|---|---|---|---|---|---|---|
| | Ausgang | 5min | 10min | 30min | 60min | 120min | 360min |
| Beispiel 4 | 2800 | 2500 | 2100 | 1600 | 1100 | 520 | 60 |

### Beispiel 5 (Vergleichsbeispiel)

Es wurden 956 L VE-Wasser im Rührreaktor vorgelegt, unter Rühren 280 kg einer FeClSO₄-Lösung (mit 40,73 % FeClSO₄) zudosiert und die Lösung auf 50 °C aufgeheizt. Anschließend wurde die Lösung mit NaOH (100 g/L) bis pH 5,0 mit 25-30 kg/min) gefällt und 30 min. nachgerührt. Die Suspension wurde auf einer Filterpresse bis zur Leitfähigkeit von < 1000 S/cm gewaschen und anschließend im Umlufttrockenschrank bei 75 °C getrocknet. Der getrocknete Feststoff wird durch ein 2mm-Sieb gedrückt, der Feinanteil < 0,5 mm abgesiebt.
BET: 334 m²/g;
Abriebwert (Abriebtest): 3,6 %
Trübung (Trübungstest) nach 2 Durchläufen: 219 FNU;
Trübung (Trübungstest) nach 5 Durchläufen: 330 FNU;
Wassergehalt: 6,5 %;
Schüttdichte: 0,51 g/cm³;
As(V)-Adsorption nach 120 min: 97,3 %;Fließtest: Fließt;
Phase: evtl. schlecht kristallisiertes δ-FeOOH.

| | As-Gehalt im Filtrat [µg/l] nach x min Kontaktzeit | | | | | | |
|---|---|---|---|---|---|---|---|
| | Ausgang | 5min | 10min | 30min | 60min | 120min | 360min |
| Beispiel 5 | 2600 | 1900 | 1700 | 950 | 430 | 70 | 10 |

### Übersichtstabelle

| **Beispiel** | **1** | **1A** | **2** | **2A** | **3** | **4** | **5** |
|---|---|---|---|---|---|---|---|
| BET m²/g | 326 | 326 | 185 | 326 | 304 | 312 | 334 |
| Abrieb in % nach den Abreibtest | 2,4 | - | 4,7 | - | 1,1 | 0,7 | 3,6 |
| Wassergehalt in % | 9 | 22.3 | 6,0 | 16,9 | 11,4 | 12,7 | 6,5 |
| Schüttdichte in g/cm³ | 0,94 | 1,00 | 0,94 | 1,08 | 1,00 | 0,89 | 0,51 |
| As Adsorption (% nach 120 min) | 59,3 | 96,4 | 63,0 | 98,8 | 64,3 | 81,4 | 97,3 |
| Trübung FNU nach 2 Durchläufe (Trübungstest) | 250 | 28 | - | 276 | 167 | 135 | 219 |
| Trübung FNU nach 5 Durchläufe(Trübungstest) | 135 | 16 | | 76 | 152 | 139 | 330 |
| Trübung FNU nach 6 Durchläufe(Trübungstest) | 148 | 11 | - | 53 | 135 | 109 | 304 |
| Trübung FNU nach 7 Durchläufe(Trübungstest) | 126 | 13 | - | 62 | 134 | 120 | 322 |
| Trübung FNU nach 8 Durchläufe(Trübungstest) | 136 | 13 | - | 54 | 149 | 103 | 478 |
| Trübung FNU nach 9 Durchläufe(Trübungstest) | 120 | 13 | - | 47 | 151 | 95 | 417 |
| Trübung FNU nach 10 Durchläufe(Trübungstest) | 124 | 9 | - | 44 | 134 | 85 | 489 |
| Fließtest: Fließt (Ja oder Nein) | Ja | Ja | Ja | Ja | Ja | Ja | Ja |

Fig. 1 zeigt die Trübungsmessung der überstehenden Lösung, mit zunehmenden Abriebszyklen nach den Trübungstest. Die y-Achse zeigt dabei die Trübungseinheit [FNU], während die x-Achse die Durchläufe darstellt. Dabei sind die Kurven für Handelsübliches Bayoxide^{®} E33 als A, Beispiel 1 als B, Beispiel 1A als C, Beispiel 2A als D, Beispiel 3 als E, Beispiel 4 als F und Vergleichsbeispiel 5 als G angegeben. Fig. 1 zeigt, dass Bayoxide^{®} E33 stets einen Abriebswert und daher eine Trübung auf sehr hohem Niveau, während die erfindungsgemäßen Granulate eine sehr niedrige Trübung zeigen. Die erfindungsgemäßen Produkte sind als Beispiele genannt.

## Patentansprüche

1. Granulate bestehend im Wesentlichen aus Eisenoxid- und/oder Eisenoxyhydroxid, die eine Trübung nach dem in der Beschreibung angegebenen Trübungstest von < 300 FNU aufweisen, erhaltlich durch die Mischung von im wesentlichen zwei Komponenten, bestehend im wesentlichen aus
1. einer Base und
2. einer Fe(III)-Lösung
wobei, sofern eine FeClSO₄-Lösung verwendet wird, diese zur vorgelegten Base zugegeben wird.

2. Granulate gemäß Anspruch 1, **dadurch gekennzeichnet, dass** die Granulate eine Trübung nach dem in der Beschreibung angegebenen Trübungstest von < 200 FNU aufweisen.

3. Granulate gemäß Anspruch 1, **dadurch gekennzeichnet, dass** die Granulate einen Abriebswert nach dem in der Beschreibung angegebenen Abriebtest von < 10 % aufweisen.

4. Granulate gemäß Anspruch 3, **dadurch gekennzeichnet, dass** die Granulate einen Abriebswert nach dem in der Beschreibung angegebenen Abriebtest von < 5 %, insbesondere von < 1,5 % aufweisen.

5. Granulate gemäß Anspruch 1, **dadurch gekennzeichnet, dass** die Granulate α-, β-, γ- und/oder δ-FeOOH-Phasen und/oder, Ferrihydrit- sowie Misch- und Zwischenphasen derselben aufweisen.

6. Granulate gemäß Anspruch 1, **dadurch gekennzeichnet, dass** die Granulate zusätzlich mit Oxiden und/oder /(Oxi)hydroxiden der Elemente Al, Mg, Ti verfestigt werden.

7. Granulate gemäß Anspruch 1, **dadurch gekennzeichnet, dass** die Granulate einen Wassergehalt von < 50%, insbesondere < 20% aufweisen.

8. Granulate gemäß Anspruch 1, **dadurch gekennzeichnet, dass** die Granulate eine Korngröße von 0,01 bis 5 mm , insbesondere von 0,1 bis 1 mm, aufweisen.

9. Granulate gemäß Anspruch 1, **dadurch gekennzeichnet, dass** die Granulate durch Sprühtrocknung hergestellt werden und eine Korngröße von < 0,3 mm, insbesondere < 0,2 mm aufweisen.

10. Granulate gemäß Anspruch 1, **dadurch gekennzeichnet, dass** die Granulate eine BET-Oberfläche gemessen nach dem Trägergasverfahren (He:N₂=90:10) nach der Einpunkt-Methode gemäß DIN 66131 (1993) von > 100 m²/g, insbesondere > 250 m²/g aufweisen.

11. Granulate gemäß Anspruch 1, **dadurch gekennzeichnet, dass** die Granulate nach dem in der Beschreibung angegebenen Fließtest fließbar sind.

12. Granulate gemäß Anspruch 1, **dadurch gekennzeichnet, dass** die Granulate eine Arsen-Adsorption nach dem Arsen-Adsorptionstest von > 55 %, insbesondere > 80% aufweisen.

13. Granulate gemäß Anspruch 1, **dadurch gekennzeichnet, dass** die Granulate Schadstoffe und/oder Schwermetalle wie Phosphate, Antimon-, Beryllium-, Selen-, Tellur-, Schwefel-, Cyan- und Arsenverbindungen aus strömbaren Medien wie Gasen und/oder Flüssigkeiten wie Wasser oder Abwasser entfernen.

14. Verwendung der Granulate gemäß einem oder mehrerer der Ansprüche 1 bis 13 zur Entfernung von Schadstoffen und/oder Schwermetallen wie Phosphaten, Antimon-, Beryllium-, Selen-, Tellur-, Schwefel-, Cyan- und Arsenverbindungen aus strömbaren Medien wie Gasen und/oder Flüssigkeiten wie Wasser oder Abwasser.

15. Verwendung der Granulate gemäß Anspruch 14 zur Entfernung von Arsenverbindungen aus Wasser oder Abwasser.

16. Verwendung der Granulate gemäß Anspruch 15 in Wasseraufarbeitungsanlagen wie Kartuschen zur Entfernung von Arsenverbindungen aus Wasser oder Abwasser.

## Claims

1. Granules consisting essentially of iron oxide and/or iron oxyhydroxide which have a turbidity by the turbidity test specified in the description of < 300 FNU, obtainable by the mixture of essentially two components essentially consisting of
1. a base and
2. an Fe(III) solution
wherein, if use is made of an FeClSO₄ solution, it is added to the charged base.

2. Granules according to Claim 1, **characterized in that** the granules have a turbidity by the turbidity test specified in the description of < 200 FNU.

3. Granules according to Claim 1, **characterized in that** the granules have an abrasion value by the abrasion test specified in the description of < 10%.

4. Granules according to Claim 3, **characterized in that** the granules have an abrasion value by the abrasion test specified in the description of < 5%, in particular < 1.5%.

5. Granules according to Claim 1, **characterized in that** the granules have α-, β-, γ- and/or δ-FeOOH phases and/or ferrihydrite phases and also mixed and intermediate phases of the same.

6. Granules according to Claim 1, **characterized in that** the granules, in addition are solidified with oxides and/or /(oxy)hydroxides of the elements Al, Mg, Ti.

7. Granules according to Claim 1, **characterized in that** the granules have a water content of < 50%, in particular < 20%.

8. Granules according to Claim 1, **characterized in that** the granules have a particle size of 0.01 to 5 mm, in particular from 0.1 to 1 mm.

9. Granules according to Claim 1, **characterized in that** the granules are produced by spray drying and have a particle size of < 0.3 mm, in particular < 0.2 mm.

10. Granules according to Claim 1, **characterized in that** the granules have a BET surface area measured by the carrier gas method (He:N₂ = 90:10) by the one-point method as specified in DIN 66131 (1993) of > 100 m²/g, in particular > 250 m²/g.

11. Granules according to Claim 1, **characterized in that** the granules are flowable by the flow test specified in the description.

12. Granules according to Claim 1, **characterized in that** the granules have an arsenic adsorption by the arsenic adsorption test of > 55%, in particular >80%.

13. Granules according to Claim 1, **characterized in that** the granules remove pollutants and/or heavy metals such as phosphates and compounds of antimony, beryllium, selenium, tellurium, sulphur, cyanide and arsenic from flowable media such as gases and/or liquids such as water or wastewater.

14. Use of the granules according to one or more of Claims 1 to 13 for the removal of pollutants and/or heavy metals such as phosphates and compounds of antimony, beryllium, selenium, tellurium, sulphur, cyanide and arsenic from flowable media such as gases and/or liquids such as water or wastewater.

15. Use of the granules according to Claim 14 for removing arsenic compounds from water or wastewater.

16. Use of the granules according to Claim 15 in water treatment systems such as cartridges for removing arsenic compounds from water or wastewater.

## Revendications

1. Granulés constitués essentiellement d'oxyde de fer et/ou d'oxyhydroxyde de fer, qui présentent une opacité < 300 FNU d'après le test d'opacité indiqué dans la description, que l'on peut obtenir grâce au mélange de principalement deux composants, constitué principalement de :
1. une base et
2. une solution de fer (III),
une solution de FeClSO₄ étant ajoutée, dans la mesure où celle-ci est utilisée, à la base préparée.

2. Granulés selon la revendication 1, **caractérisés en ce que** les granulés présentent une opacité < 200 FNU d'après le test d'opacité indiqué dans la description.

3. Granulés selon la revendication 1, **caractérisés en ce que** les granulés présentent une valeur d'abrasion < 10 % d'après le test d'abrasion indiqué dans la description.

4. Granulés selon la revendication 3, **caractérisés en ce que** les granulés présentent une valeur d'abrasion < 5 %, en particulier < 1,5 % d'après le test d'abrasion indiqué dans la description.

5. Granulés selon la revendication 1, **caractérisés en ce que** les granulés présentent des phases α-FeOOH, β-FeOOH, γ-FeOOH et/ou δ-FeOOH et/ou des phases ferrihydrites ainsi que des phases mixtes et des phases intermédiaires de celles-ci.

6. Granulés selon la revendication 1, **caractérisés en ce que** les granulés sont stabilisés de manière supplémentaire avec des oxydes et/ou des (oxy)hydroxydes des éléments Al, Mg, Ti.

7. Granulés selon la revendication 1, **caractérisés en ce que** les granulés présentent une teneur en eau < 50 %, en particulier < 20 %.

8. Granulés selon la revendication 1, **caractérisés en ce que** les granulés présentent une taille de grain de 0,01 à 5 mm, en particulier de 0,1 à 1 mm.

9. Granulés selon la revendication 1, **caractérisés en ce que** les granulés sont fabriqués par séchage par pulvérisation et présentent une taille de grain < 0,3 mm, en particulier < 0,2 mm.

10. Granulés selon la revendication 1, **caractérisés en ce que** les granulés présentent une surface BET > 100 m²/g, en particulier > 250 m²/g, mesurée par le procédé de gaz porteur (He:N₂=90:10) en mode continu conformément à la norme DIN 66131 (1993).

11. Granulés selon la revendication 1, **caractérisés en ce que** les granulés peuvent s'écouler d'après le test d'écoulement indiqué dans la description.

12. Granulés selon la revendication 1, **caractérisés en ce que** les granulés présentent une adsorption d'arsenic > 55 %, en particulier > 80 %, d'après le test d'adsorption d'arsenic.

13. Granulés selon la revendication 1, **caractérisés en ce que** les granulés éliminent des produits nocifs et/ou des métaux lourds comme des phosphates, des composés d'antimoine, de béryllium, de sélénium, de tellure, de soufre, de cyanure et d'arsenic à partir de milieux circulants comme des gaz et/ou des liquides comme l'eau ou les effluents liquides.

14. Utilisation des granulés selon une ou plusiers des revendications 1 à 13 pour l'élimination de produits nocifs et/ou de métaux lourds comme des phosphates, des composés d'antimoine, de béryllium, de sélénium, de tellure, de soufre, de cyanure et d'arsenic à partir de milieux circulants comme des gaz et/ou des liquides comme l'eau ou les effluents liquides.

15. Utilisation des granulés selon la revendication 14 pour l'élimination de composés d'arsenic à partir d'eau ou d'effluents liquides.

16. Utilisation des granulés selon la revendication 15 dans des installations de traitement de l'eau, comme des cartouches pour l'élimination de composés d'arsenic à partir d'eau ou d'effluents liquides.
